Europäisches Patentamt

European Patent Office

Office européen des brevets

(19)

(11) Publication number: **0 155 768**

A2

(12) # EUROPEAN PATENT APPLICATION

(21) Application number: 85301143.5

(51) Int. Cl.⁴: **B 09 B 5/00**

(22) Date of filing: 20.02.85

(30) Priority: 21.02.84 US 581627
21.09.84 US 653101

(43) Date of publication of application:
25.09.85 Bulletin 85/39

(84) Designated Contracting States:
BE DE FR GB IT NL

(71) Applicant: FOSTER WHEELER ENERGY CORPORATION
110 South Orange Avenue
Livingston New Jersey 07039(US)

(72) Inventor: Deghetto, Kenneth A.
42 Cornell Drive
Livingston New Jersey 07039(US)

(72) Inventor: Russomano, Richard J.
123 Highland Avenue
Chatham New Jersey 07039(US)

(74) Representative: Allen, Oliver John Richard et al,
Lloyd Wise, Tregear & Co. Norman House 105-109 Strand
London, WC2R 0AE(GB)

(54) Contamination removal system and method.

(57) A system and method for removing contamidated fluid from the ground in which water is pumped through a perforated pipe system into the ground to be decontaminated. The water and the contaminants are then drawn into a removal pipe system and to a treatment unit for separating the contaminants from the water before the latter is returned to the first perforated pipe system. According to an alternative embodiment the water is drawn into the removal pipe system by producing a high velocity stream of water using a venturi device and passing the stream over the upper end of the removal conduit. The vacuum created by the high velocity stream causes the water to flow into the removal conduit system.

EP 0 155 768 A2

Croydon Printing Company Ltd.

-1-

## CONTAMINATION REMOVAL SYSTEM AND METHOD

### Background of the Invention

This invention relates to a contamination removal system and method and, more particularly, to such a system and method for removing contaminants from the ground.

In cases where there are spills of contaminants, such as toxic materials, hydrocarbon materials, chemical wastes, etc. into or onto the ground, the materials will contaminate the surrounding ground water through action of the natural movement of water through the ground. If the spills are not isolated and the contaminants somehow removed, they will spread beyond the original spill area through the ground water system thereby endangering water supplies. Although, in view of the above, it is highly desirable to remove the contaminants from the area, few options are available. In some cases, physical removal and disposal or treatment of the soil is required. Alternatively, the spill site may be isolated to a depth below which the spill traveled via ground water action, and the contaminants retained in this area of ground isolated from surrounding areas. However, these methods are very expensive and do not eliminate the contaminants.

-2-

## Summary of the Invention

It is therefore an object of the present invention to provide a system and method of the above type in which contaminants are removed from the ground in an efficient, yet relatively inexpensive, manner.

It is a further object of the present invention to provide a system and method of the above in which water is pumped into the ground for mixing with the contaminants and facilitating their removal from the ground.

It is a further object of the present invention to provide a system and method of the above type in which the contaminants are removed from the water before the latter is circulated back into the system.

It is a further object of the present invention to provide a system for removing contaminants from the ground either _in situ_ or at a remote site.

Toward the fulfillment of these and other objects, according to the system and method of the present invention a plurality of perforated pipes are connected to a supply header for distributing water under the force of a pump throughout the contaminated area. An additional set of perforated pipes are connected to a return header for withdrawing the water and the contaminants from the ground. The contaminants are removed from the water before the latter is recycled back to the system. According to an alternative embodiment water is selectively circulated through a first and second conduit system located in the area of the soil to be decontaminated. Water is discharged from the first conduit system to the soil so that the water can enter the soil and form a mixture with the contaminants. The mixture of water and contaminats are removed from the soil in response to the flow of water in the second conduit system.

### Brief Description of the Drawings

The above brief description, as well as further objects, features and advantages of the present invention will be more fully appreciated by reference to the following detailed description of the presently preferred but nonetheless illustrative embodiment in accordance with the present invention when taken in conjunction with the accompanying drawings in which:

FIG. 1 is a diagrammatic view of one embodiment of the system of the present invention shown in a typical installation;

FIG. 2 is a cross-sectional view depicting a portion of the system of FIG. 1;

FIG. 3 is a schematic view depicting a portion of the system of FIG. 1;

FIGS. 4 and 5 are views similar to FIGS. 1 and 2 respectively, but depicting an alternate embodiment of the present invention;

FIGS. 6 and 7 are partial elevational views depicting details of a portion of the system of the embodiment of FIGS. 1-3 and the embodiment of FIGS. 4 & 5;

FIG. 8A is a diagrammatic plan view of a portion of an alternate embodiment of the system of the present invention;

FIG. 8B is a diagrammatic elevational view of another portion of the alternative embodiment of the system of the present invention shown in FIG. 8A;

FIG. 9 is a cross-sectional view taken along the line 9-9 of FIG. 8A;

FIG. 10 is a cross-sectional view taken along the line 10-10 of FIG. 8A;

FIG. 11 is an enlarged, partial elevational view depicting details of the lower portion of the inlet risers schematically depicted in FIG. 8A; and

FIG. 12 is an enlarged, partial elevational view depicting details of the upper portion of the inlet risers and associated collection conduits schematically depicted in FIG. 8A.

### Description of the Preferred Embodiments

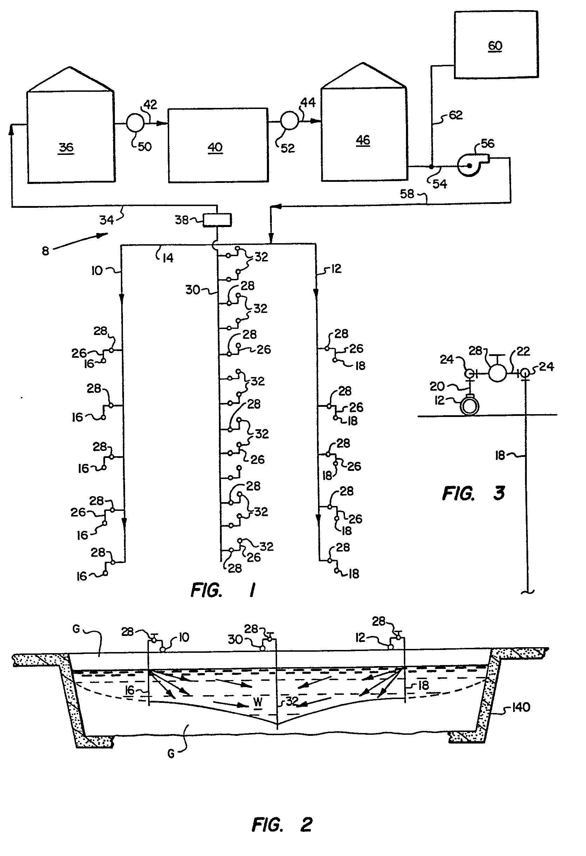

Referring to FIGS. 1 and 2 of the drawings, there is shown a single-field decontamination process system generally designated by the reference numeral 8. The reference numerals 10 and 12 refer to a pair of horizontally extending, spaced parallel supply headers, respectively, which rest on the ground along the longitudinal margins of the area to be decontaminated, where the ground material has been designated G and the water table has been designated W. One end of each header 10 and 12 is connected to a cross-header 14 which extends perpendicularly to the headers 10 and 12 and which is connected to each by an elbow connector, or other conventional device.

A plurality of spaced, vertical risers, shown by the reference numerals 16 and 18, extend into the ground G and the water table W for a distance corresponding to the depth of the area to be decontaminated, with their upper ends extending slightly above ground level and immediately adjacent the supply headers 10 and 12, respectively.

The risers 16 and 18 are connected to the headers 10 and 12, respectively, in a manner shown in detail in FIG. 3 in connection with a riser 18 and the header 12. More particularly, a vertical pipe 20 extends upwardly from the header 12 and a horizontal pipe 22 is connected at each end to a swing joint 24. One swing joint 24 is connected to the upper end of the pipe 20 and the other swing joint 24 is connected, via a horizontal pipe segment 26 (FIG. 1), to the riser 18. A valve 28 is disposed in the horizontal pipe 22 to control the flow of water from the riser 18 to the header 12. It is understood that the risers 16 are connected to the header 10 in an identical manner.

The risers 16 and 18 are perforated along their entire lengths to permit water to discharge therefrom towards the center of the area to be decontaminated, as will be described.

A horizontal return header 30 extends on the ground G and between the supply headers 10 and 12 in a spaced parallel relation thereto. A plurality of risers 32 extend through the ground G and into the water table W for a distance corresponding to the depth of the area to be decontaminated, with their upper ends extending slightly above ground level and immediately adjacent the return header 30. The risers 32 are perforated along their entire lengths and are connected to the header 30 in the same manner as the risers 18 are connected to the header 12 as discussed above in connection with reference to FIG. 3.

The number of risers 16, 18 and 32 are dependent upon the hydraulics of each system which is designed for a given situation and in certain cases there could be as few as one riser provided for each of the headers 10, 12 and 30.

A pipe 34 connects an end of the return header 30 to a storage tank 36. A vacuum pump 38 is connected to the pipe 34 for drawing water and contaminants into and through the risers 32 and the header 30, whereby they are passed into the storage tank 36. It is intended that the pump 38 will provide sufficient suction when the risers 32 are sunk into a contaminated area to a depth in the neighborhood of 25 feet. When decontamination exists below the 25 foot level it is possible to obtain the necessary additional section pressure by installing a submergible pump at the bottom of each of the risers 32 which would be located in the water table W.

The inlet of a treatment unit 40 is connected, via a pipe 42, to the outlet of the storage tank 36 and is adapted to operate in any conventional manner to separate the contaminants from the water. The treatment unit disclosed in U.S. Patent No. 3,947,327, is exemplary of the type of unit contemplated and the disclosure of this patent is hereby incorporated by reference.

A pipe 44 connects the outlet of the treatment unit 40 to another storage tank 46 for storing the clean water received from the treatment unit. A pair of booster pumps 50 and 52 are disposed in the pipes 42 and 44, respectively, for pumping the water to and from the treatment unit 40 as needed.

The outlet of the storage tank 46 is connected, via a pipe 54 to the inlets of a pump 56, whose outlet is connected, via a pipe 58, to the cross-header 14. As a result, the clean water is reintroduced to the system for discharging into the ground G through the supply headers 10

0155768

-8-

and 12 and their respective risers 16 and 18.

Make-up water from a storage tank 60 is supplied, via a pipe 62, to the pump 56 for introduction to the supply headers 10 and 12 and the risers 16 and 18 as needed.

In operation, water from the pump 56 is passed, via the pipe 58 and the cross-header 14, to the supply headers 10 and 12. The water passes from the supply headers 10 and 12 into their respective risers 16 and 18 and, through the perforations in the latter, into a fairly wide area of the ground G as shown in FIG. 2 where it mixes with the contaminants. The vacuum pump 38 draws the water and contaminants into the perforated vertical risers 32 and the header 30 whereby they pass, via the pipe 34, to the storage tank 36. The vacuum pump 38 and pump 56 can operate continuously in situations involving severe contamination or intermittently through a control system for lesser contaminated areas.

From the storage tank 36 the water and contaminants are passed, via the pipe 42, to the water treatment unit 40 which operates to remove the contaminants from the water and the latter is passed, via the pipe 44, to the storage tank 46. This water, along with make-up water from the tank 60, is then circulated through the system, including the pump 56, the pipe 58, the cross-header 14 and the supply headers 10 and 12.

-9-

It is thus seen that this system and method of the present invention provide a simple yet efficient means of decontaminating a particular area of ground without a significant cost in materials and labor.

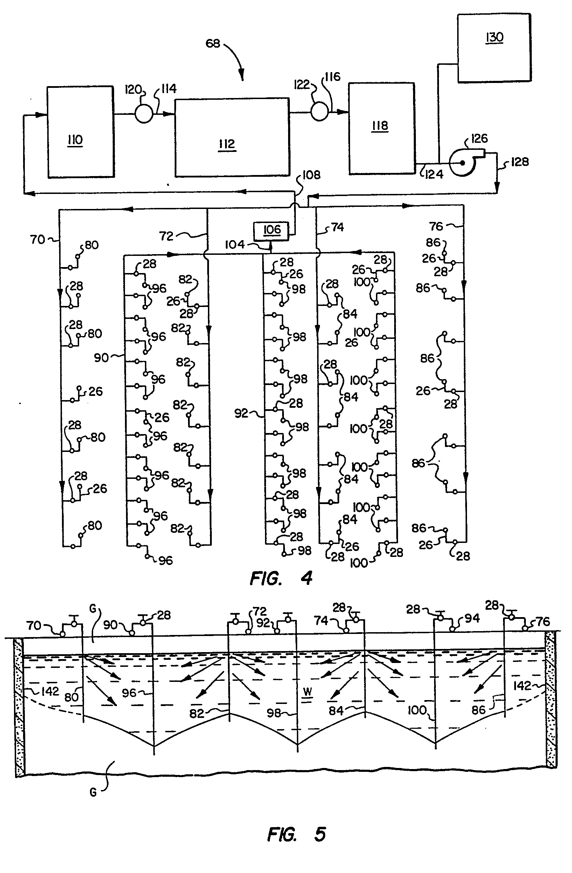

Referring to FIGS. 4 and 5 there is shown a multi-field decontamination process system generally designated by the reference numeral 68. The multi-field decontamination process system 68 is designed to cover a larger area than the single-field decontamination process system 8 and includes four horizontally extending, spaced parallel supply headers 70, 72, 74 and 76 which rest on the ground G. One end of each of the headers 70, 72, 74 and 76 is connected to a cross-header 78 in a conventional manner.

A plurality of spaced, vertical risers, shown by the reference numerals 80, 82, 84 and 86, extend into the ground G and into the water table W for a distance corresponding to the depth of the area to be decontaminated, with their upper ends extending slightly above ground level and immediately adjacent the supply headers 70, 72, 74 and 76, respectively.

The risers 80, 82, 84 and 86 are connected to their respective headers 70, 72, 74 and 76 in a manner shown in detail in FIG. 3 in connection with a riser 18 and the header 12 of the previous embodiment.

The risers 80, 82, 84 and 86 are perforated along their entire lengths to permit water to discharge therefrom

-10-

towards the center of the area to be decontaminated as shown in FIG. 5.

Three horizontal, parallel return headers 90, 92 and 94 extend on the ground G in an alternating spaced relationship with the supply headers 70, 72, 74 and 76. A plurality of risers 96, 98 and 100 extend into the ground G and into the water table W for a distance corresponding to the depth of the area to be decontaminated, with their upper ends extending slightly above ground level and immediately adjacent the return headers 90, 92 and 94, respectively. The risers 96, 98 and 100 are perforated and are connected to the headers 90, 92 and 94, respectively, in the same manner as discussed above. A cross-header 102 is connected to the ends of the return headers 90, 92 and 94 and is connected, via a pipe 104 to the inlet of a vacuum pump 106. A pipe 108 connects the outlet of the vacuum pump 106 to a storage tank 110.

The inlet of a treatment unit 112 is connected, via a pipe 114, to the outlet of the storage tank 110 and is adapted to operate in any conventional manner as discussed above in connection with the treatment unit 40 of the previous embodiment.

A pipe 116 connects the outlet of the treatment unit 112 to another storage tank 118 for storing the clean water received from the treatment unit. A pair of booster pumps

-11-

120 and 122 are disposed in the pipes 114 and 116, respectively, for pumping the water to and from the treatment unit 112 as needed.

The outlet of the storage tank 118 is connected, via a pipe 124, to the inlet of a pump 126, whose outlet is connected, via a pipe 128, to the cross-header 78. As a result, the clean water is reintroduced to the system for discharging into the ground G through the supply headers 70, 72, 74 and 76 and their respective risers 80, 82, 84 and 86.

Make-up water from a storage tank 130 is supplied to the pump 126 for introduction to the supply headers and their risers as needed.

In operation, water from the pump 126 is passed, via the pipe 128 and the cross-header 78, to the supply headers 70, 72, 74 and 76, and into their respective risers 80, 82, 84 and 86. The water discharges through the perforations in the latter into the ground G and the water table W as shown in FIG. 5 where it mixes with the contaminants. The vacuum pump 106 draws the water and contaminants into the perforated vertical risers 96, 98 and 100 and the headers 90, 92 and 94 whereby they are introduced into the cross-header 102 and pass, via the pipe 108, to the storage tank 110. The vacuum pump 106 and pump 126 could operate either constantly or intermittently as discussed above in connection with the previous embodiment.

-12-

From the storage tank 110 the water and contaminants are passed, via the pipe 114, to the water treatment unit 112 which operates to remove the contaminants from the water and the latter is passed, via the pipe 116, to the storage tank 118. This water, along with make-up water from the tank 130, is then circulated through the system, including the pump 126, the pipe 128, and cross-header 78 and the supply headers 70, 72, 74 and 76.

It is thus seen that the system and method of the embodiment of FIGS. 4 and 5 enjoys all of the advantages of the embodiment of FIGS. 1-2 yet covers a much larger area with a minimum of additional piping.

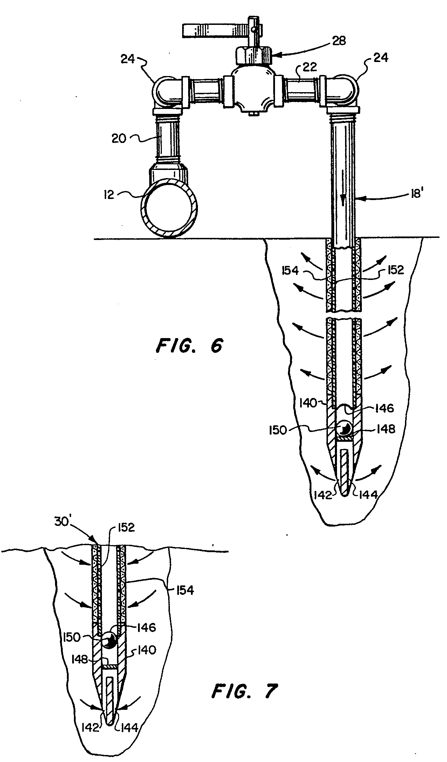

The reference numerals 18' and 30' in FIGS. 6 and 7 respectively depict an alternate embodiment of the risers 18 and 30 respectively. The riser 18' is shown with its associated header 12, pipes 20 and 22, swing joint 24, pipe segment 26 and valve 28, it being understood that the riser 30' is connected in the same manner.

Each riser 18' and 30' has a reinforced tapered lower end portion 140 defining a pair of discharge slots 142 and 144. An upper valve seat 146 and a lower valve seat 148 are disposed within the end portion 140 and a ball valve 150 moves between the valve seats 146 and 148 to control the flow of water through the risers 18' and 30' and their respective end portions 140, as will be described.

A plurality of radially extending perforations 152 are axially spaced along the risers 18' and 30' including the end portion 140, and a screen 154 extends around that portion of the risers between their respective end portions 140 and ground level.

During installation, the risers 18' and 30' are connected to their respective pipe segments 26 and their respective valves 28 are opened to permit water to enter the risers and the end portions 140. The force of the water acting on the ball valve 150 moves it to the lower seat 148.

When the ball valve 150 is seated on the lower seat 148, a small clearance is provided between the ball valve 150 and the corresponding inner wall of the end portion 140 to define a small path for water flow at an accelerated velocity. Therefore, during installation a small jet stream of water passes through the slots 142 and 144 to aid in softening the surrounding earth and facilitate the installation of the risers 18' and 30' into the ground.

In normal operation of the riser 18', the force of the water will maintain the ball valve 150 on the lower seat and the water will discharge through the perforations 152 and through the slots 142 and 144 into the ground G or the water table W.

In normal operation of the riser 30' the vacuum created

0155768

-14-

through the riser will pull the ball valve 150 upwardly against the upper valve seat 146, and the design of the latter seat, the corresponding upper wall portion of the end portion 140 and the ball valve is such that all flow upwardly through this portion of the end portion 140 is blocked. Thus any undesirable ingress of soil, rocks, or the like, is prevented.

It is understood that the risers 80, 82, 84 and 86 of the embodiment of FIGS. 4 and 5 can be configured identically to the riser 18' of FIG. 6 and that the risers 96, 98 and 100 can be configured identically to the riser 30' of FIG. 7.

The following is an example of the parameters involved in decontaminating a 100 feet by 100 feet area having the type of soil indicated and utilizing the system of FIGS. 4 and 5 with headers having an 8" diameter, supply risers having a 3" diameter and return risers having a 1½" diameter.

| Type of Soil | Max. Depth | Water Req'd | Supply Riser Spcng | No. of Supply Risers | Return Riser Spcng | No.of Return Risers |
|---|---|---|---|---|---|---|
| Coarse Sand | 15' | 2100 gpm | 20' | 20 | 3' | 99 |
| Medium Sand | 17½' | 2000 gpm | 25' | 16 | 4' | 75 |
| Fine Sand | 22' | 1500 gpm | 40' | 9 | 5' | 60 |

-15-

It is understood that several changes may be made in the foregoing without departing from the scope of the invention. For example, the number of risers connected to each header along with the size and spacing of the risers and the headers can be varied.

Further, the particular configuration of each piping network can be varied in accordance with the particular area to be decontaminated.

If desirable, a particular volume of earth can be evacuated from a given area and a pit formed which can be lined with clay, concrete or the like, as shown by the reference numerals 140 and 142, in FIG. 2 and FIG. 5, respectively, and the system of the present invention can be installed in the pit to decontaminate soil that is placed in the pit for treatment. The contamination material could be removed to another location after the decontamination operation is been completed and additional contaminated material could be placed in the pit.

Both the single-field decontamination process system 8 and the multi-field decontamination process system 68 are designed to remain in place for relatively long periods of time in areas of extreme contamination or removal for reuse from one contaminated area to another in area of less contamination.

While the multi-field process system 68 of FIGS. 4 and 5 covers three fields of contamination which is essentially three times the size of the single-field decontamination process system 8, it should be understood that plurality of contamination fields are contemplated in connection with the multi-field contamination process system 68, consistent with the capacity of the component equipment used. Thus, the multi-field contamination system 68 could take the form of two fields of contamination or more than three fields of contamination.

It is understood that any or all of the storage tanks 36, 46 and 60 of the first embodiment as well as the storage tanks 110, 118 and 130 of the second embodiment could be replaced by sealed ponds.

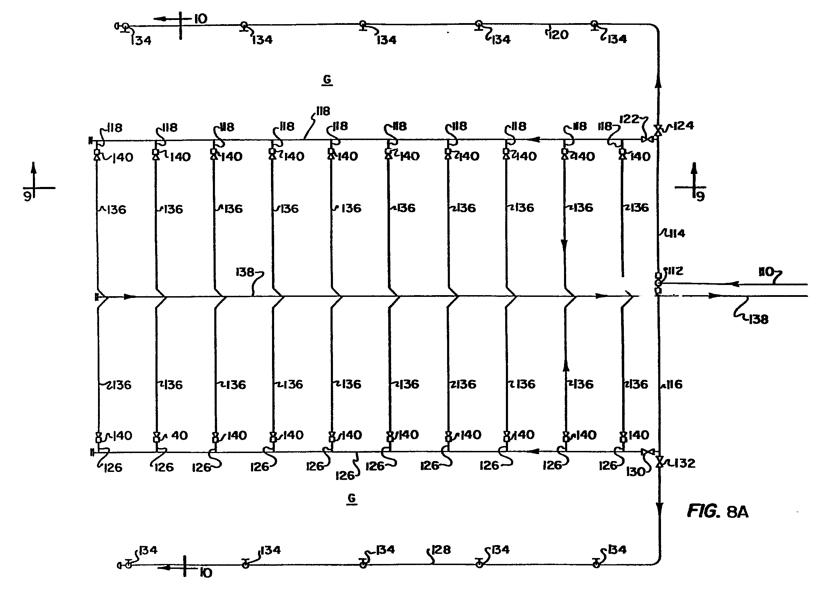

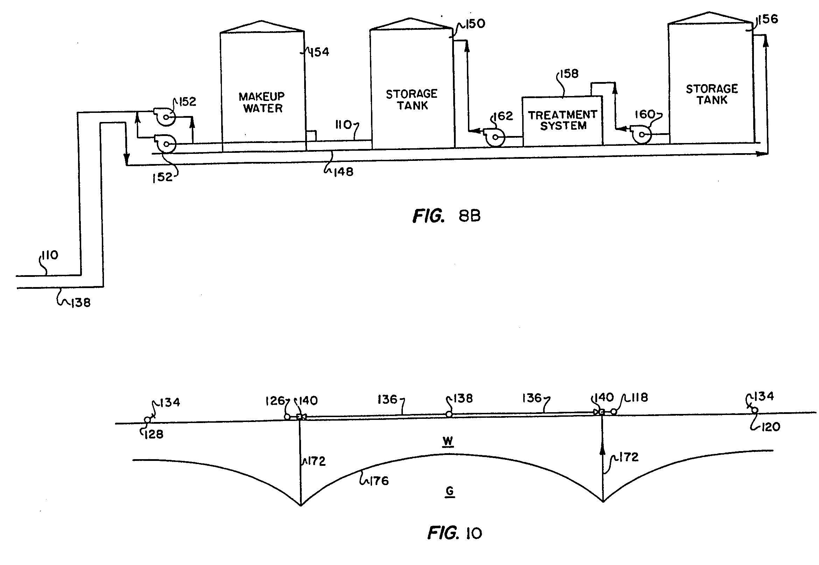

Referring to the third embodiment depicted in FIGS. 8A and 8B of the drawings, there is shown a single-field decontamination process system. In general the system comprises a water injection and removal portion shown in FIG. 8A and a water supply and treatment shown in FIG. 8B.

Referring first to FIG. 8A, the water injection and removal portion of the system is shown positioned in and on a section of contaminated ground, or soil, G. Fresh water used for decontaminating soil G enters through a main supply header 110 from the water supply and treatment portion shown in FIG. 8B described hereinbelow. Main supply header 110, and all other headers hereinafter described preferably comprise conduits of standard design and of a size selected for the carriage capacity required for the particular application. The supply water is split into two streams by a tee joint 112 connected to main supply header 110 and to supply cross-headers 114 and 116. Supply cross-headers 114 is connected to an eductor supply header 118 and a sprayer supply header 120 through block valves 122 and 124, respectively.

Correspondingly, supply cross-headers 116 is connected to another eductor supply header 126 and a sprayer supply header 128 through block valves 130 and 132, respectively. Sprayer supply headers 120 and 128 are connected to a series of spray nozzles 134, which are positioned and adjusted to flood the entire area of ground G which is to be decontaminated. Although five spray nozzles 134 are shown connected to each of sprayer supply headers 120 and 128, it should be understood that any number could be used, the exact number being dependent upon a number of factors including the surface area of ground G that is to be flooded and decontaminated.

Eductor supply headers 118 and 126 are connected to a series of return cross-headers 136 which, in turn, are connected to a return header 138. Return header 138 returns the used water to the water supply and treatment portion of the system shown in FIG. 8B, as will be explained. Each of return cross-headers 136 has connected therein an eductor 140, or other similar venturi device. Each of eductors 140 is connected to the upper ends of a series of inlet risers, which are not visible in FIG. 8A and which will be more fully described in connection with FIG.12. In the embodiment illustrated in FIG. 8A, a total of ten eductors 140 and return cross-headers 136 is shown connected to each of eductor supply headers 118 and 126, but it should be understood that any number might be used. The exact number of such eductors and return cross-headers is dependent upon a number of factors including the area of ground G to be decontaminated. The relationship between the number of educators and spray nozzles 134 is illustrated to be in a ratio of 2:1, although the exact ratio may be dependent upon factors such as the type of soil comprising ground G and the type of contaminant that is to be removed.

All of supply cross-headers 114 and 116, sprayer supply headers 120 and 128, eductor supply headers 118 and 126, return cross-headers 136, and return header 138 are preferably positioned on or above the surface of ground G. Sprayer supply headers 120 and 128 and spray nozzles 134 may be elevated sufficiently to provide sprayer coverage of the area of ground G that is to be decontaminated.

Referring now to FIG. 8B, the water supply and treatment portion of the system is connected between supply header 110 and return header 138. Fresh water is stored in a storage tank 150 standing on the earth surface 148 and is supplied to the water injection and removal portion of the system of FIG. 8A from storage tank 150 through conduit 110. The fresh water is circulated throughout the system by pumps 152, which may be connected in parallel in header 110. The number size, and types of pumps 152 is dependent upon the particular application, including the depth to which contamination removal is desired.

Also connected to header 110 on the outlet side of storage tank 140 is a make-up water tank 154, whose purpose is to replace any water lost in the decontamination process if required. Connected to the inlet side of storage tank 150 is a water reclaiming apparatus for treating water recirculated from the water injection and removal portion of the system of FIG. 8A. The water reclaiming apparatus comprises a storage tank 156 for holding contaminated water returned through header 138 and a water treatment system 158 connected to the outlet thereof. Water treatment 158 may be of the type disclosed in U.S. Patent 3,947,327, the disclosure of which is hereby incorporated by reference. Water from contaminated water storage tank 156 is circulated through water treatment system 158 by means of transfer pumps 160 and 162 which may be connected in the conduit between storage tank 156 and treatment system 158 and between treatment system 158 and storage tank 150. It should be understood that the previously described storage tanks could be replaced with sealed ponds without departing from the scope of the invention.

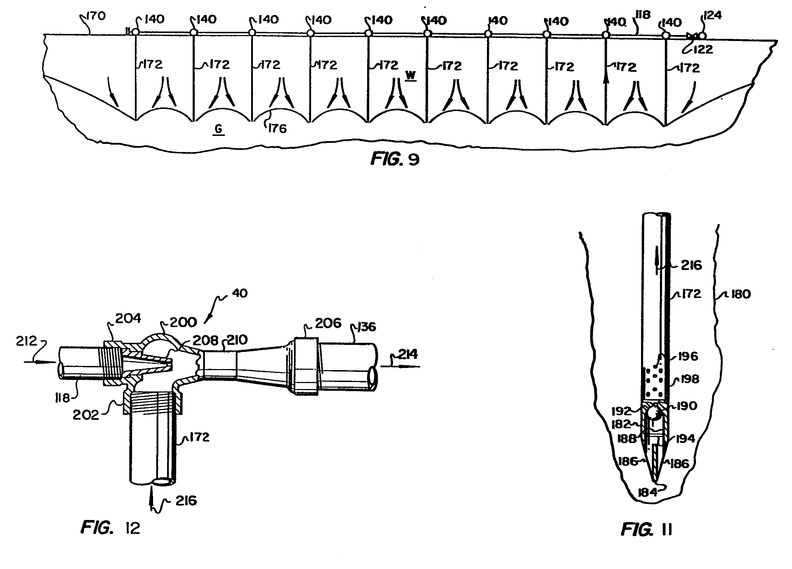

Referring to FIGS. 9 and 10, a plurality of eductors 140 are connected to return cross-headers 136 and to a corresponding number of inlet risers 172 positioned in the ground G. Inlet risers 172 are connected to eductors 140 generally perpendicular to eductor supply header 118. Inlet risers 172 and eductors 140 are preferably spaced more or less equidistantly to provide uniform removal of contaminated water from ground G. Inlet risers 172 are of sufficient length to reach the maximum depth of soil contamination and are perforated on their lower ends to permit the entry of water, as will be discussed later. The particular arrangement illustrated contemplates that risers 172 would be sunk into the contaminated area to a depth of about 25 feet.

Referring now to FIG. 11, the lower end of each inlet riser 172 is shown positioned in ground G. Risers 172, which are preferably of standard design, may be inserted into ground G by water jetting in a manner to be described later, which creates a hole 180 of irregular size and shape. The lower end portion 182 of each inlet riser 172 is tapered to a point 184 to permit easy entry into ground G, and point 184 has defined therein a plurality of longitudinal slots 186 which permit the exit of water from inlet riser 172 under circumstances to be described. Above slots 186 in a channel 188 is a valve assembly comprising a ball 190, an upper valve seat 192 and a lower valve seat 194. Above the valve assembly, inlet riser 172 has a plurality of radially-extending perforations 196 limited to a small portion of the length of inlet riser 172 on the lower end thereof. The perforations are surrounded by a screen 198 whose purpose is to prevent the entry of soil, rocks and other large particulate materials.

Inlet risers 172 are constructed to permit easy installation into ground G by jetting action. According to this method a source of pressurized water is connected to the upper end of the inlet riser 172, and the water flows downwardly through inlet riser 172. The flow of water forces ball 190 downwardly onto valve seat 194, which is constructed to permit passage of water therearound. The water then passes through slots 186 and into the ground G, and a sufficient amount of soil is removed to create a hole 180 to permit insertion of the riser 172.

Referring to FIG. 12, the jet eductor 140 connected atop each inlet riser 172 is shown in detail. Eductor 140, which may be of standard design, is generally shaped as a fully enclosed tee connector 200, which is connected to inlet riser 172 by means of threaded connection 202 and between two sections of cross-header 136 and supply header 118 or 126 by means of threaded connections 206 and 204 on one end thereof. Disposed in the branch of tee connector 200 that is connected to eductor supply header 118 or 126 is a nozzle 208. Nozzle 208 is positioned with its longitudinal axis generally perpendicular to the axis perpendicular to the axis of inlet riser 172, and the outlet of nozzle 208 extends across the upper end of inlet riser 172. The branch of tee connector 200 that is connected to section of cross-header 136 is an elongated section having a reduced diameter section which defines a venturi 210. It should be understood that, while an eductor is described for use in connection with the invention, any equivalent venturi device could be utilized; and the term eductor should be read as including all such equivalent devices.

In operation, fresh water from storage tank 150, and from make-up water tank 154, if required, is circulated through conduit 110 by means of pumps 152 to supply cross-headers 114 and 116. Initially, block valves 122 and 130 are closed and block valves 124 and 132 are opened. This directs the fresh water through sprayer supply headers 120 and 128 to spray nozzles 134, which uniformly floods the area of ground G to be decontaminated. The water thus sprayed on the surface soaks into the ground G and mixes with the contaminants, creating a water table W in ground G down to the level indicated by the numeral 176 (FIGS. 9 and 10).

When flooding of ground G is completed, block valves 122 and 130 are opened, and block valves 124 and 132 are closed, thereby ceasing the flow of fresh water into sprayer supply headers 120 and 128, and redirecting the fresh water into eductor supply headers 118 and 126.

The water thus supplied by eductor supply headers 118 and 126 passes through nozzle 208 in each eductor 140 as shown by arrow 212 in FIG. 12. Nozzle 208 forms a high velocity stream of water that is directed through venturi section 210 and into the corresponding cross-header 136 as indicated by arrow 214. The passage of the stream of water through venturi section 210 causes a drop in pressure due to the venturi effect. The reduced pressure inside tee connector 200 is transmitted into the corresponding inlet riser 172 causing the higher pressure water-contaminant mixture to migrate through the ground G toward riser 172.

Referring to FIG. 11, the water-contaminant mixture flows from ground G, into hole 180, thence through perforations 196 in the lower portion of each riser 172, and finally upwardly inside riser 172 as indicated by arrow 216. The mixture thus removed from ground G mixes with the fresh water exiting from nozzle 208 and passes into cross-header 136 as shown in FIG. 12.

The water thus supplied by eductor supply headers 118 and 126 passes through nozzle 208 in each eductor 140 as shown by arrow 212 in FIG. 12. Nozzle 208 forms a high velocity stream of water that is directed through venturi section 210 and into the corresponding cross-header 136 as indicated by arrow 214. The passage of the stream of water through venturi section 210 causes a drop in pressure due to the venturi effect. The reduced pressure inside tee connector 200 is transmitted into the corresponding inlet riser 172 causing the higher pressure water-contaminant mixture to migrate through the ground G toward riser 172.

Referring to FIG. 11, the water-contaminant mixture flows from ground G, into hole 180, thence through perforations 196 in the lower portion of each riser 172, and finally upwardly inside riser 172 as indicated by arrow 216. The mixture thus removed from ground G mixes with the fresh water exiting from nozzle 208 and passes into cross-header 136 as shown in FIG. 12.

Initially, a portion of the ground water also flows through slots 186 of each riser 172, which causes ball 190 to rise and seal against upper valve seat 192. Thereafter ground water can enter risers 172 only through perforations 196. Perforations 196 are limited to only a small length at the lower end of riser 172 in order to force water to travel downwardly from the ground surface as well as laterally between the risers 172. This dual flow activity enhances the flushing action of the water.

The mixture of water and contaminants thus removed from the soil through risers 172 passes through the remaining sections of return headers 136 and into the main return header 138. The mixture then passes from main return header 138 into storage tank 156, from which it is moved by pump 160 into treatment system 158 where contaminants are removed from the water. The contaminants removed by treatment system 158 may be disposed of by any one of several methods well known in the art. The decontaminated water emanating from treatment system 158 then moves into fresh water storage tank 150 by means of pump 162, from whence the water movement cycle begins again.

It should be understood that the pattern of headers described in FIG. 8A could be altered for a particular application, and any number of sprayer supply headers and eductor supply headers could be used in combination with each other. Further, the cycling of block valves 122, 124, 130 and 132 to alternately direct the fresh water to either the sprayer supply headers 120 and 128 or the eductor supply headers 118 and 126 is optimized for maximum passage of water from spray nozzles 134, through ground G and into the eductors 140. This depends upon a number of factors, including the type of soil and the type contaminant to be removed.

The foregoing system may be used to remove contaminants either _in situ_ or at a remote decontamination site. In the latter case a particular volume of earth would be evacuated from a given area, and a pit would be formed and lined with clay, concrete, or the like. The system of the present invention would be installed in the pit to decontaminate soil that is placed in the pit for treatment. The decontaminated material could then be removed to another location after the decontamination operation has been completed and additional contaminated material could be placed in the pit.

While particular embodiments of the invention have been shown and described, it is clear that changes and modifications could be made thereto without departing from the true scope and spirit of the invention. It is the intention of the applicant that the appended claims be construed broadly to cover all such changes and modifications.

WHAT IS CLAIMED IS:

1. A system for removing contaminants from the ground comprising:

a first network of pipes at least a portion of which are perforated and disposed in said ground, means for pumping water through said pipes for discharging the water through said perforations and into said ground such that the water absorbs the contaminants, a second network of pipes at least a portion of which are perforated and disposed in said ground, means from drawing water through said second network of pipes along with the water and absorbed contaminants, means connected to said second pipe network for removing the contaminants from said water, and means connecting the contaminant-removal means to said pumping means for recirculating said water through said first pipe network.

2. The system of claim 1 wherein said first network of pipes comprises a cross-header, two headers connected to the respective ends of said cross-header to form a substantially U-shaped configuration, and a plurality of perforated vertical risers connected to said headers and extending into said ground.

3. The system of claim 1 wherein said second network of pipes comprises a header, and a plurality of perforated vertical risers connected to said header and extending into said ground.

4. The system of claims 2 or 3 wherein said headers extend horizontally and rest on the upper surface of said ground.

5. The system of claim 1 wherein said first and second network of pipes each comprises a cross-header, a plurality of headers connected to said cross-header, and a plurality of perforated vertical risers connected to said headers and extending into said ground.

6. The system of claims 2 or 5 wherein said pumping means comprises a pump, and means connecting said pump to the cross-header of said first network of pipes for distributing said water through the corresponding headers and risers.

7. The system of claims 3 or 5 wherein said vacuum establishing means comprises a vacuum pump and means connecting said vacuum pump to the headers of said second pipe network for drawing said water and said contaminants into and through the corresponding risers and headers.

8. The system of claim 1 further comprising storage means connected to said contaminant-removal means for receiving said water from said contaminant-removal means.

9. A system for removing contaminants from the ground comprising:

a first network of perforated pipes comprising a cross-header, a plurality of headers connected to said cross-header and a plurality of perforated vertical risers connected to said headers and extending into said ground; means for pumping water into said cross-header, through said headers and risers for discharging the water through said perforations and into said ground such that the water absorbs the contaminants; a second network of perforated pipes comprising a cross-header, a plurality of headers connected to said cross-header and a plurality of perforated vertical risers connected to said headers and extending into said ground; means for drawing water through said second network of pipes along with the water and absorbed contaminants; means connected to said second pipe network for removing the contaminants from said water; and means connecting the contaminant removal means to said pumping means for recirculating said water through said first pipe network.

10. The system of claim 9 wherein said headers and cross-headers extend horizontally and rest on the upper surface of said ground.

11. The system of claim 9 wherein said pumping means comprises a pump, and means connecting said pump to the cross-header of said first network of pipes for distributing said water through the corresponding headers and risers.

12. The system of claim 9 wherein said vacuum establishing means comprises a vacuum pump and means connecting said vacuum pump to the cross-headers of said second pipe network for drawing said water and said contaminants into and through the corresponding risers and headers.

13. The system of claim 9 further comprising storage means connected to said contaminant-removal means for receiving said water from said contaminant-removal means.

14. A method for removing contaminated fluid from the ground comprising:

pumping water into said ground through a network of pipes including perforated pipes disposed in said ground, drawing the water along with contaminants into a second network of pipes including perforated pipes disposed in the ground, passing the water and contaminants from said second network of pipes to a treatment unit, removing the contaminants from the water at said treatment unit, and pumping the decontaminated water from said treatment unit to said first network of pipes.

15. The method of claim 14 further comprising the step of passing the decontaminated water to a storage unit before said latter step of pumping.

16. An apparatus for removing contaminants from soil, comprising:

a first and a second conduit system;

means connected to the first conduit system for discharging water flowing through said first conduit system to said soil to form a mixture of contaminants and water;

means connected to the second conduit system for removing said mixture from said soil in response to the flow of water through said second conduit system; and

means for selectively circulating water through said first and second conduit systems.

17. Apparatus in accordance with claim 16 wherein said removing means includes means for creating a reduced pressure by action of the water passing therethrough.

18. Apparatus in accordance with claim 17 wherein said means for creating a reduced pressure comprises a venturi.

19. Apparatus in accordance with claim 18 wherein said venturi comprises an eductor.

20. Apparatus in accordance with claim 18 wherein said removing means further includes a perforated tube in communication with said venturi and positioned in said soil.

21. Apparatus in accordance with claim 20 wherein said perforations in said tube are on the lower end thereof.

22. Apparatus in accordance with claim 21 further including a screen for preventing passage of particulate material through said perforations in said tube.

23. Apparatus in accordance with claim 18 wherein said discharging means comprises a spray nozzle.

24. Apparatus in accordance with claim 18 wherein said selective circulating means comprises a single source of

0155768

-32-

water connected to said conduit system and valve means.

25. Apparatus for removing contaminants from soil comprising:

first means for supplying pressurized water;

means responsive to the flow of water through said first supplying means for flooding the soil;

whereby said water may soak into the soil and form a mixture with the contaminants;

a perforated tube positioned in said soil;

second means for supplying pressurized water;

means responsive to the flow of water through said second supplying means for creating a reduced pressure in the tube;

whereby the reduced pressure in said tube causes the mixture to enter said tube from said soil and rise therein for removal; and

means for alternately directing said water from a common source to said first and second supplying means in a predetermined manner.

26. Apparatus in accordance with claim 25 wherein the perforations in said tube are on the lower end thereof.

27. Apparatus in accordance with claim 26 further including a screen for preventing passage of debris through the perforations in said tube.

28. Apparatus in accordance with claim 27 wherein said flooding means includes a spray nozzle.

29. A method of removing contaminants from soil, comprising the steps of;

introducing a supply of pressurized water from a source to the area of the soil to be decontaminated;

flooding the surface of the soil with the pressurized water for mixing with said contaminants;

creating a reduced pressure substantially below the surface of the soil by means of the flow of water from said source; and

collecting the mixed contaminants and water at the surface of the soil by action of the reduced pressure.

30. A system for removing contaminants from soil comprising:.

means in a first area in the contaminated soil for supplying fresh water to said contaminated soil to the depth of contamination to create a mixture with said contaminants;

a plurality of risers in a second area of said contaminated soil and positioned therein to the depth of said contamination, said risers being perforated to permit the entry of said mixture flowing from the first area;

a plurality of eductors on said risers, said eductors having an integral nozzle therein for projecting a high velocity stream of water over said risers, whereby said mixture may be drawn due to reduced pressure in said risers from said contaminated soil through said risers for mixture with the high velocity stream of water;

means for supplying pressurized water to said plurality of eductors; and

means for carrying said mixture from said eductors for treatment.

31. A system in accordance with claim 30 wherein said risers are perforated on the lower end thereof.

32. A system in accordance with claim 37 wherein said supplying means comprises a plurality of spray nozzles.

33. A system in accordance with claim 32 further including means for alternately supplying water from a single source to said water supplying means and said means for supplying pressurized water to said plurality of eductors.

0155768

FIG. 1

FIG. 3

FIG. 2

FIG. 4

FIG. 5

3

0155768

FIG. 6

FIG. 7

**FIG.** 8A

**FIG.** 8B

**FIG.** 10

*FIG. 9*

*FIG. 12*

*FIG. II*